# EUROPEAN PATENT SPECIFICATION

(11) **EP 0 730 925 B1**
(45) Date of publication and mention of the grant of the patent: **14.06.2000**
(21) Application number: 95103508.8
(22) Date of filing: 10.03.1995
(51) Int. Cl.: B23B 27/14

(54) **High speed cutting insert with improved chip groove**
Hochgeschwindigkeitsschneideinsatz mit Spanbrecher
Plaquette de coupe à grande vitesse avec brise copeaux

(43) Date of publication of application: 11.09.1996
(73) Proprietor: VALENITE INC., Dover, Delaware (US)
(72) Inventor: Lowe, Tony, Royal Oak, MI 48073 (US); Katbi, Karl, Troy, MI 48084 (US); Patterson, John, Hazel Park, MI 48030 (US); Bernadic, Thomas, Madison Hts., MI 48071 (US); Brockett, Brendan, Dearborn Hts., MI 48127 (US)
(74) Representative: Grünecker, Kinkeldey, Stockmair & Schwanhäusser Anwaltssozietät

(56) References cited:
- EP-A- 0 579 963
- EP-A- 0 589 265
- WO-A-92/11108
- US-A- 4 856 942
- US-A- 5 180 258
- MACHINES PRODUCTION, vol. 3, no. 562, September 1991 BOULOGNE/SEINE FR, pages 21-30, 'Usinage des aciers inoxydables: étude du tournage avec outils en carbure de tungstène revêtus.'

## Description

The present invention relates to a polygonal, indexable cutting insert of the type as indicated in the preamble portion of claim 1. Such a cutting insert is known from EP-A-0 579 963.

Said conventional cutting insert has been found not fully satisfactory with regard to high cutting speeds and for finishing work.

U.S. Patent No. 4,856,942 discloses a polygonal cutting insert for cutting aluminum metal which comprises rounded cutting corners with adjacent side surfaces joined at an angle from about 33 to 35 degrees. Grooved recesses extending along each cutting edge have a particular geometry which includes a shallow descending surface followed by a steeply descending surface leading to the bottom of the grooved recess. There is no showing of the radiused chip groove design of the instant invention, and neither are there showing of the discontinuous chop breaker pads of the instant invention.

U.S. Patent No. 5,180,258 discloses a high feed/heavy depth of cut polygonal throwaway insert for use in the aluminum wheel turning market. The cutting land has "tooth-like" cavities along its flanks to reduce friction and so allow for increased material removal rates. A chip breaker pad is provided at each nose portion of the insert which is contiguous, and directly adjacent to, the cutting land. In addition, there are also provided separate island forms, to allow work piece material to flow around increase the material removal rate.

It is an object of the present invention to provide an improved cutting insert in order to obtain an improved usefulness at high cutting speeds and for finishing work. Furthermore, an improved chip control at high speeds and light depths of cut is aimed at.

The above object is achieved by the subject-matter of claim 1.

The present invention provides a polygonal, throw away insert to turn ductile and super alloy materials at moderate to high cutting speeds at low feed rates and light depths of cut. Furthermore, the inventive cutting insert has a high cutting land along the entire cutting edge to provide increased shield, and a full radius chip groove to curl inserts at right angles to increase breakability of the chips. Furthermore, a chip breaker pad is provided which is discontinuous with the central locating surface to enhance strains induced into the chip and provide access for coolant to reduce thermal shock to the insert body during use.

The present invention is directed to a polygonal, indexable cutting insert for use in turning operations involving ductile and super alloy materials. The insert is comprised of an upper surface and a lower surface, which are generally planar and separated by a side wall extending substantially unbroken therebetween to define a body. It is preferred that the insert be positive, so that those skilled in the art recognize that the intersection of the sidewall with the lower surface is at an obtuse angel, as measured relative to lower surface, and the intersection of the sidewall with the upper surface, which defines the cutting edge, is at an acute angle, relative to the upper surface. However, it is contemplated that the insert may be negative, in which case the intersection of the sidewall with the upper and lower surface is at right angles. The cutting edge extends around the entire periphery of the insert.

Each side wall is comprised of side flanks, each side flank being defined as that portion of the sidewall extending from one corner to an adjacent corner of the insert. At least two diametrically opposed corners of the insert are nose portions of the insert.

A positive, planar cutting land entry surface descends directly from the cutting edge and joins a generally radiused chip groove floor rearward which is rearward of the cutting land. A generally planar locating surface is disposed on the upper surface and projects from the cutting land entry surface above the periphery of the insert. The locating surface surrounds a centrally located aperture extending through the upper surface and exiting from the lower surface. The locating surface had an inclined, planar chip braking ramp surface extending, along the flanks, to said chip groove floor.

The insert is further equipped with chip breaker pads at said nose portions, which project above the periphery cutting edge, but below the locating surface. The nose portions are discontinuous form the locating surface and have an ascending surface intersecting with, and rearward from, the radiused chip groove. The chip breaker pads have a generally planar top form surface 50, and is separated from the locating surface by a top form channel. The top form channel allows coolant to flow around the chip breaker pad and cool the insert, thereby decreasing any thermal shock to the insert during cutting.

### BRIEF DESCRIPTION OF THE DRAWINGS

Figure 1 is a three dimensional perspective view of the insert.
Figure 2 is a top plan view of the insert.
Figure 3 is a detailed cut away view of the insert taken along line 3 - 3 of Figure 2.
Figure 4 is a detailed cut away view of the insert taken along line 4 - 4 of Figure 2.

### DETAILED DESCRIPTION OF A PREFERRED EMBODIMENT

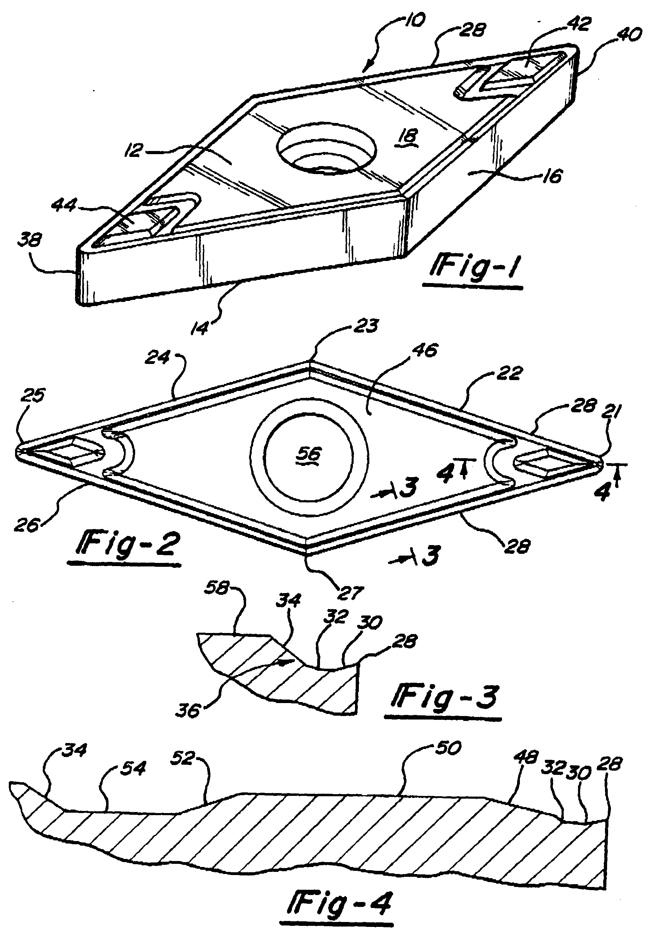

Turning now to the drawings wherein like numeral depict like structures, and particularly to Figures 1 and 2, polygonal indexable insert 10 is comprised of upper surface 12, lower surface 14, separated by sidewall 16 extending substantially unbroken therebetween to define the body 18 of the insert. The upper and lower surfaces are generally planar and generally parallel to each other.

The side wall is comprised of side flanks which are defined as a portion of the side wall extending from one corner to an adjacent corner of the insert. Thus, in the insert depicted in the drawings, there are four side flanks 22, 24, 26, and 28, extending from corners 21, 23, 25, and 27 respectively. Note that at least two diametrically opposed corners are nose portions 38 and 40. The side flanks are generally planar, and the sidewall intersect the upper surface to form a cutting edge 28, extending around the periphery of the insert. The side flanks intersect each other at the nose portions of the insert at an angle of about 33 to 38 degrees, and at the non cutting corners 23 and 27 at an angle which is supplemental to nose portions.

For purposes of the following discussion, rearward is toward the center of the insert relative to the cutting edge, whereas forwardly is away from the center of the insert, relative to the cutting edge.

Directly rearward of the cutting edge is descending entry surface 30, which extends around the entire cutting edge of the insert. The entry surface is generally planar and descends from the cutting edge such that is inclined in a positive direction relative to the cutting edge. Preferably, the entry surface is inclined 14 degrees.

Turning now to Figures 3 and 4, rearward of the entry surface is radiused chip groove 32, which is concavely radiused.

Preferably, the chip groove is radiused 0.51 mm (.02 inches). As seen in Figures 1 and 2, the insert is further equipped with a locating surface 46 which, as seen in Figure 3 and 4, projects above the periphery of the insert. The locating surface surrounds a centrally located aperture 56, which extends through the upper surface and exits from the lower surface. The aperture is configured such tat is accepts an ISO screw fastener, such as is well known to those skilled in the art. The locating surface 46 has a generally planar seating surface and an inclined, planar, chip ramp breaking surface. Along the flank of the insert the ramp surface intersects the radiused chip groove floor. Preferably, the ramp surface is planar and inclined at a 35 degree angle.

Each nose portion has a chip breaker pad 42 and 44, respectively, which are separated, or discontinuous with, the locating surface on the upper surface of the insert. The chip breaker pads are in close proximity, but separated from the entry surface and project above the periphery of the cutting edge, but are below the locating surface. Turning to Figure 4, the chip pad has a planar chip pad ascending surface 48 rearward of the chip groove floor, and intersect a top surface 50 on the chip pad. The top surface is generally planar. The chip pad ascending surface 48 in preferably inclined at a 35 degree angle. Rearward of the top surface is chip pad descending surface 52, which intersect planar channel floor 54. The planar channel floor intersects the ramp surface 34 on the locating surface.

The insert as described herein is designed to turn ductile or super alloy materials at a moderate to high cutting speeds at low feed rates and depths of cuts. specifically, the feed rates are in the range of about 0.102 to 0.254 mm (.004 to .010) IPR and has a depth of cuts in the range of about 0.254 to 2.03 mm (.010 to .080 inches).

While one embodiment has been described with regard to this invention, many variations are possible without departing from the scope of the invention, as set forth in appended claims.

## Claims

1. A polygonal, indexable cutting insert, comprising an upper surface (12) and a lower surface (14) in spaced relationship to each other and generally parallel to each other; said surfaces separated by a planar side wall (16) extending substantially unbroken therebetween to define a body (18); said side wall comprised of side flank portions (22,24,26,28); each said side flank portions defined as a portion of the side wall extending from one corner (28=21,23,25,27) of the insert to an adjacent corner (21,23,25,27) of the insert; said side wall (16) intersects said upper surface (12) to define a cutting edge (28) extending along the entire periphery of the insert; at least two corners being diametrically opposed nose portions (38,40); a generally concave, radiused chip groove floor rearward said cutting land surface (30); a generally planar locating surface (46) on said upper surface (12) projecting from said cutting land entry surface (30) above said periphery; said locating surface surrounding a centrally located aperture (56) extending through the upper surface (12) and exiting from said lower surface (14); said insert further equipped with chip breaker pads (42,44); said pad being discontinuous from said locating surface; each said chip breaker pad (42,44) having an ascending surface (48) rearward from said chip groove floor (32) and intersecting a planar top surface (50);
**characterized in that**
a positive planar cutting land entry surface (30) is descending directly from said cutting edge (28);
the locating surface (46) has an inclined, planar chip breaker ramp surface extending along the flanks, from said chip groove floor (32) to intersect a planar seat surface;
the chip breaker pads (42,44) being separated from said locating surface by a channel.

2. The insert of claim 1, wherein said ascending surface (48) has a greater incident angle proximal the chip groove than the ascending surface proximal to the channel.

3. The insert of claim 1, wherein the channel is planar.

4. The insert of claim 1, wherein the chip groove (32) has a concave radius of about .02 inches (0.51 mm.).

5. The insert of claim 1, wherein said chip entry surface (30) is inclined at about 14 degrees.

6. The insert of claim 1, wherein said chip breaker ramp surface is inclined about 35 degrees.

## Patentansprüche

1. Polygonaler wendefähiger Schneideinsatz mit einer oberen Fläche (12) und einer unteren Fläche (14) in Abstandsbeziehung zueinander und allgemein zueinander parallel, wobei die Flächen durch eine planare Seitenwand (16) getrennt sind, die sich im wesentlichen ununterbrochen dazwischen erstreckt, um einen Körper (18) zu bestimmen; die Seitenwand aus Seitenflankenabschnitten (22,24,26,28) besteht; jeder Seitenflankenabschnitt als ein Abschnitt der Seitenwand bestimmt ist, der sich von einer Ecke (28=21, 23, 25, 27) des Einsatzes zu einer benachbarten Ecke (21, 23, 25, 27) des Einsatzes erstreckt; die Seitenwand (16) die obere Fläche (12) zum Bestimmen einer Schneidkante (28) schneidet, die sich längs des gesamten Umfangs des Einsatzes erstreckt; wobei mindestens zwei Ecken diametral einander gegenüberliegende Nasenabschnitte (38, 40) sind; einem allgemein konkaven, mit Krümmungsradius versehenen Spannutenboden hinter der Schneidstegfläche (30); einer allgemein planaren Bezugsfläche (46) an der oberen Fläche (12), die von der Schneidsteg-Eintrittsfläche (30) über den Umfang vorsteht; wobei die Bezugsfläche einen zentral gelegenen Durchbruch (56) umgibt, der sich durch die obere Fläche (12) erstreckt und von der unteren Fläche (14) austritt; der Einsatz weiter mit Spanbrecherklötzen (42, 44) versehen ist; wobei jeder Klotz von der Bezugsfläche abgesetzt ist; jeder solche Spanbrecherklotz (42, 44) eine nach hinten ansteigende Fläche (48) hinter dem Spannutenboden (32) besitzt, die eine planare obere Fläche (50) schneidet;
**dadurch gekennzeichnet**, dass
eine positive, planare Schneidsteg-Eintrittsfläche (30) direkt von der Schneidkante (28) weg abfällt;
die Bezugsfläche (46) eine geneigte planare Spanbrecher-Rampenfläche besitzt, die sich längs der Flanken von dem Spannutenboden (32) erstreckt und eine planare Sitzfläche schneidet;
die Spanbrecherklötze (42, 44) über den Umfang (des Einsatzes) hinaus vorstehen, jedoch unter der Bezugsfläche an den Nasenabschnitten (38, 40) des Einsatzes gelegen sind; und
die Spanbrecherklötze (42, 44) von der Bezugsfläche durch einen Kanal getrennt sind.

2. Einsatz nach Anspruch 1, bei dem die ansteigende Fläche (48) einen größeren NeiKanals.

3. Einsatz nach Anspruch 1, bei dem der Kanal planar ist.

4. Einsatz nach Anspruch 1, bei dem die Spannut (32) einen konkaven Radius von etwa 0,51 mm (0,02 inch) besitzt.

5. Einsatz nach Anspruch 1, bei dem die Klotz-Eintrittsfläche (30) mit etwa 14° geneigt ist.

6. Einsatz nach Anspruch 1, bei dem die Spanbrecher-Rampenfläche mit etwa 35° geneigt ist.

## Revendications

1. Insert de coupe indexable et polygonal comprenant une paroi supérieure (12) et une paroi inférieure (14) séparées l'une de l'autre et, de façon générale, parallèles entre elles, les dites parois étant séparées par une paroi latérale plane (16) s'étendant de façon substantiellement continue entre elles de manière à déterminer un corp (18), la dite paroi latérale comportant des parties latérales de flanc (22, 24, 26, 28), chacune des dites parties latérales de flanc étant définie en tant que partie de la paroi latérale s'étendant à partir d'un angle (21, 23, 25, 27) de l'insert jusqu'à un angle adjacent (21, 23, 25, 27) de l'insert, la dite paroi latérale (16) intersectant la dite paroi supérieure (12) pour déterminer un bord de coupe (28) s'étendant le long de la périphérie complète de l'insert, au moins deux angles formant des parties de nez diamétralement opposés (38, 40), une zone arrondie de rainures pour copeaux de forme générale concave située derrière la dite surface de coupe plate (30), une surface de repérage de forme généralement plane (46) sur la dite paroi supérieure (12) faisant saillie de la dite surface plate d'entrée de coupe (30) au-dessus de la dite périphérie, la dite surface de repérage entourant une ouverture (56) située au centre traversant la paroi supérieure (12) et débouchant sur la dite paroi inférieure (14), le dit insert étant, en outre, équipé de coussins de cassage des copeaux (42, 44), les dits coussins n'étant pas continus avec la dite surface de repérage, chacun des dits coussins de cassage des copeaux (42, 44) présentant une paroi ascendante (48) à l'arrière de la dite zone de rainures pour copeaux (32) et coupant une paroi plane de sommet (50),
**caractérisé en ce que**
une surface positive et plane de coupe d'entrée (30) descend directement à partir du dit bord de coupe (28) ;
la surface de repérage (46) présente une paroi plane inclinée en forme de rampe pour casser les copeaux et s'étendant le long des flancs à partir de la dite zone de rainure pour copeaux (32) pour intersecter une paroi plane de siège ;
les coussins de cassage des copeaux (42, 44) font saillie au-dessus de la périphérie de l'insert, mais au-dessous de la surface de repérage aux parties en forme de nez (38, 40) de l'insert ; et
les coussins de cassage des copeaux (42, 44) sont séparés de la dite surface de repérage par un canal.

2. Insert selon la revendication 1, dans lequel la dite surface ascendante (48) présente un angle incident à proximité de la rainure pour copeaux plus grand que celui de la surface ascendante à proximité du canal.

3. Insert selon la revendication 1, dans lequel le canal est plat.

4. Insert selon la revendication 1, dans lequel la rainure pour copeaux (32) présente un rayon concave de l'ordre de 0,51 mm (0,02 pouce).

5. Insert selon la revendication 1, dans lequel la dite surface d'entrée des copeaux (30) est inclinée de 14 degrés environ.

6. Insert selon la revendication 1, dans lequel la dite surface de cassage des copeaux en forme de rampe est inclinée de 35 degrés environ.
